# EUROPEAN PATENT APPLICATION

(11) **EP 3 007 048 A1**
(43) Date of publication of application: **13.04.2016**
(21) Application number: 13885922.8
(22) Date of filing: 29.05.2013
(51) Int. Cl.: G06F 3/048, G06F 3/0346

(54) **INFORMATION DISPLAY DEVICE**

(71) Applicant: Mitsubishi Electric Corporation, Tokyo 100-8310 (JP)
(72) Inventor: SASAKI, Mikio, Tokyo 100-8310 (JP)
(74) Representative: Pfenning, Meinig & Partner mbB
(86) International application number: PCT/JP2013/064927
(87) International publication number: WO 2014/192103

(57) **Abstract**

The present invention provides an information display device that can display information to be provided to a user without blocking an object being viewed by the user, this display device including: an image input section 1 inputting an image corresponding to a user's field of vision; a line-of-sight detection section 2 detecting a point of gaze indicative of a position of a line of sight in the user's field of vision; an object recognition section 3 extracting, as a first region, an region in the image of an object including the point of gaze detected by the line-of-sight detection section 2 from the image input by the image input section 1; a display position determination section 5 determining as a display position a position on which the user's line of sight does not fall, in the field of vision based on information on the first area extracted by the object recognition section 3; and an information display section 6 displaying the information to be provided to the user at the display position determined by the display position determination section 5.

## Description

### TECHNICAL FIELD

The present invention relates to an information display device that displays information to be provided to a user in a state superimposed on a real-world image or video.

### BACKGROUND ART

In recent years, an AR (Augmented Reality) technique has been frequently used such that, in use of a computer, information is added to or emphasized on a real world perceived by human beings to augment the real world that surrounds the human beings. As equipment using the AR technique, a device including a camera and a small display device is known, for example, Google glasses developed by Google (registered trademark) Inc.

In the device using the AR technique, a computer generates and presents, in a field of vision of naked human eyes or in a real video captured by a camera, information relating to an object in the field of vision or an object invisible to the eyes, thus assisting the perception of the human beings.

As such a technique, for example, Patent Document 1 discloses a technique in which information on persons appearing in a field of vision in a theater is superimposedly displayed on a video to allow a user to easily understand the persons. In this technique, an image in the field of vision is divided into quadrants, and whether or not the information can be displayed is determined depending on whether the person can be detected in each of the quadrants. The information is displayed in a region where no person is detected.

However, when the information to be presented to the user is displayed in the field of vision in a state superimposed on a real-world space without modification like the technique disclosed in Patent Document 1, the user's field of vision may be blocked; thus, there is a problem such that the user's field of vision is obstructed. In order to overcome this problem, Non-patent Document 1 discloses a "peripheral vision field information presentation method based on line-of-sight measurement for a sense-of-augmented-reality environment". In the peripheral vision field information presentation method, a user's point of gaze is detected using a line-of-sight recognition device (eye tracker), and a periphery of the detected point of gaze is defined as a central field, and an area outside the central field is defined as a peripheral field. The information is presented in the peripheral field to prevent the user's field of vision from being blocked.

### CITATION LIST

### PATENT DOCUMENT

Patent Document 1: Japanese Patent Application Laid-open No. 2012-108793

### NON-PATENT DOCUMENT

Non-patent Document 1: "Peripheral Vision Annotation: Noninterference Information Presentation Method by Using Gaze Information" (Peripheral Vision Field Information Presentation Method Based on Line-of-sight Measurement for a Sense-of-Augmented-Reality Environment), Yoshio Ishiguro, Junichi Rekimoto, IPSJ (Information Processing Society of Japan) Journal, Vol. 53, No. 4, pp. 1328-1337 (Apr. 2012)
Non-patent Document 2: "Proposal of Shape Feature Amount CS-HOG Based on Color Similarity", Yuhi Goto, Yuji Yamauchi, and Hironobu Fujiyoshi, Symposium on Sensing via Image Information (SSII2012), IS3-04, 2012.

### SUMMARY OF THE INVENTION

### PROBLEMS TO BE SOLVED BY THE INVENTION

As mentioned above, in the peripheral vision field information presentation method disclosed in Non-patent Document 1, the field of vision is divided into the central field and the peripheral field using the line-of-sight recognition device, and the information is presented in the peripheral field to prevent the user's field of vision from being blocked. However, depending on the shape of the object being viewed by the user, the object may be contained in the peripheral field, and a substance being viewed by the user may be blocked by the presented information.

The present invention has been made to solve the above problems, and an object thereof is to provide an information display device capable of displaying the information to be provided to the user without blocking the view of the substance being viewed by the user.

### MEANS FOR SOLVING THE PROBLEMS

In order to solve the above problems, an information display device of the present invention includes: an image inputter that inputs an image corresponding to a user's field of vision; a line-of-sight detector that detects a point of gaze indicative of a position of a line of sight in the user's field of vision; an object recognizer that extracts as a first region a region in the image of an object including the point of gaze detected by the line-of-sight detector from the image input by the image inputter; a display position determinator that determines as a display position a position on which the user's line of sight does not fall in the field of vision based on information on the first region extracted by the object recognizer; and an information display that displays information to be presented to a user at the display position determined by the display position determinator.

### EFFECT OF THE INVENTION

The information display device according to the present invention displays the information at the region in the field of vision on which the user's line of sight does not fall. Thus, the information to be provided to the user can be displayed without blocking a substance being viewed by the user.

### BRIEF DESCRIPTION OF THE DRAWINGS

Fig. 1 is a diagram depicting an information display device according to Embodiment 1 of the present invention.
Fig. 2 is a flowchart illustrating an operation of the information display device according to Embodiment 1 of the invention.
Fig. 3 is a diagram illustrating a point of gaze used for the information display device according to Embodiment 1 of the invention.
Fig. 4 is a diagram illustrating an aspect of extraction of a region where an object is present in the information display device according to Embodiment 1 of the invention.
Fig. 5 is a diagram illustrating an aspect of determination of a region where information is to be displayed in the information display device according to Embodiment 1 of the invention.
Fig. 6 is a diagram depicting an image in application of the information display device according to Embodiment 1 of the present invention to a driver's seat.
Fig. 7 is a diagram illustrating an operation of determining a display position for information in an information display device according to Embodiment 2 of the invention.
Fig. 8 is a block diagram depicting a configuration of an information display device according to a variation of Embodiment 2 of the invention.
Fig. 9 is a diagram illustrating an operation of determining a display position for information in the information display device according to the variation of Embodiment 2 of the invention.
Fig. 10 is a diagram illustrating an operation of an information display device according to Embodiment 3 of the invention.
Fig. 11 is a block diagram depicting a configuration of an information display device according to Embodiment 5 of the invention.
Fig. 12 is a block diagram depicting a configuration of an information display device according to Embodiment 6 of the invention.
Fig. 13 is a block diagram depicting a configuration of an information display device according to Embodiment 7 of the invention.
Fig. 14 is a diagram illustrating an operation of the information display device according to Embodiment 7 of the invention.

### MODES FOR CARRYING OUT THE INVENTION

Hereinafter, embodiments of the present invention will be described in accordance with the accompanying drawings.

### Embodiment 1

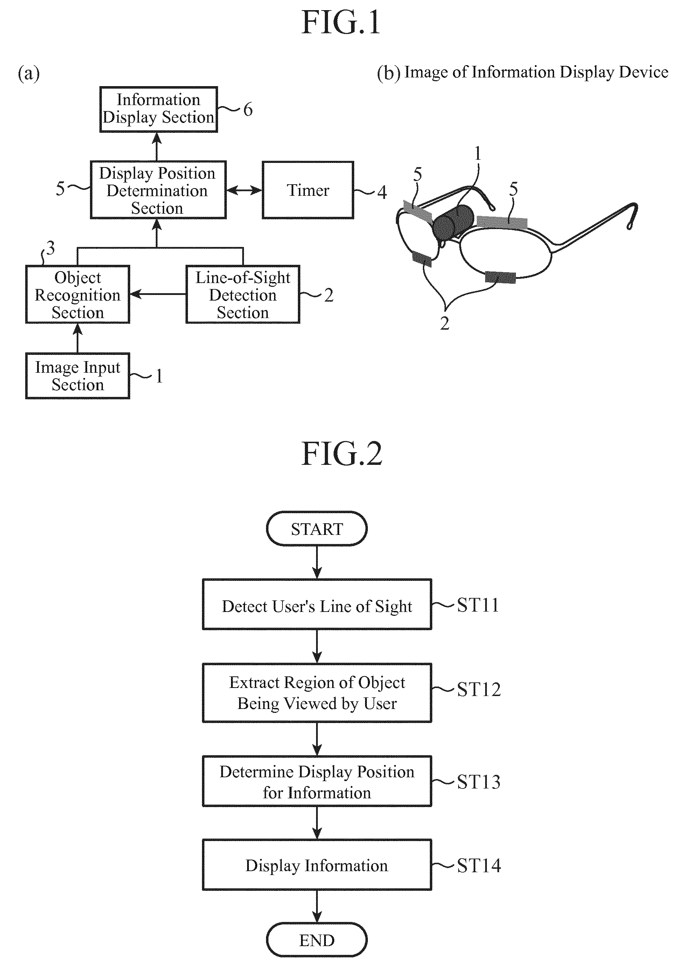

Fig. 1 is a diagram depicting an information display device according to Embodiment 1 of the present invention. Fig. 1(a) is a block diagram depicting an electrical configuration of the information display device. Fig. 1(b) is a diagram depicting an image of a structure in which the information display device is applied to a pair of glasses. The information display device includes an image input section 1, a line-of-sight detection section 2, an object recognition section 3, a timer 4, a display position determination section 5, and an information display section 6.

The image input section 1 is constituted by, for example, a camera that inputs an image corresponding to a field of vision obtained by taking an image of a user's field of vision. The image input by the image input section 1 is sent to the object recognition section 3.

The line-of-sight detection section 2 detects a line of sight indicating what part in the field of vision the user is viewing. The position in the field of vision of the line of sight (point of gaze) detected by the line-of-sight detection section 2 is sent to the object recognition section 3.

The object recognition section (object extraction section) 3 recognizes and extracts an object including the point of gaze sent by the line-of-sight detection section 2, from the image sent by the image input section 1. In other words, the object recognition section 3 extracts the region (first region) in the image of the object including the point of gaze. The object recognition section 3 performs, for example, contour extraction to recognize the shape and region of the object. The information indicative of the object recognized and extracted by the object recognition section 3 is sent to the display position determination section 5. Additionally, for image processing of extracting the region from the image, for example, object detection in the image, such an existing technique as disclosed in Non-patent Document 2 may be used.

The timer 4 measures a given time, for example, several seconds. The timer 4 is started in accordance with an instruction from the display position determination section 5. When the set time has passed, the timer 4 notifies the display position determination section 5 to that effect, and then stops.

The display position determination section 5 determines, on the basis of the information from the object recognition section 3, a display position, that is, in what region in the field of vision the information is to be displayed. The information indicative of the display position determined by the display position determination section 5 is sent to the information display section 6. At this time, the display position determination section 5 starts the timer 4 and fixes the information indicative of the display position until the display position determination section 5 receives a notification indicating that the given time has passed. In other words, the display position determination section 5 gives a notification to the information display section 6 to instruct the information display section 6 to keep the display position unchanged until the information display section 6 receives, from the timer 4, the notification indicating that the given time has passed.

The reason why the information indicative of the display position is fixed to maintain the information display for the given time is as follows. Specifically, in a case where the display position for the information is determined based on the point of gaze from the line-of-sight detection section 2, as the line of sight moves, the display position for the information also changes. In this situation, the user may fail to view the displayed information. Accordingly, once the information is displayed, the display position determination section 5 starts the timer 4 to keep the display position for the information unchanged for the given time. In this manner, even when the user's line of sight moves, the display position for the information is fixed for the given time; thus, the user can check the presented information more reliably.

The information display section 6 displays the information at the display position that is indicated by the information sent by the display position determination section 5. The information display section 6 projects the information in the field of vision using, for example, a lens portion of the pair of glasses as a screen.

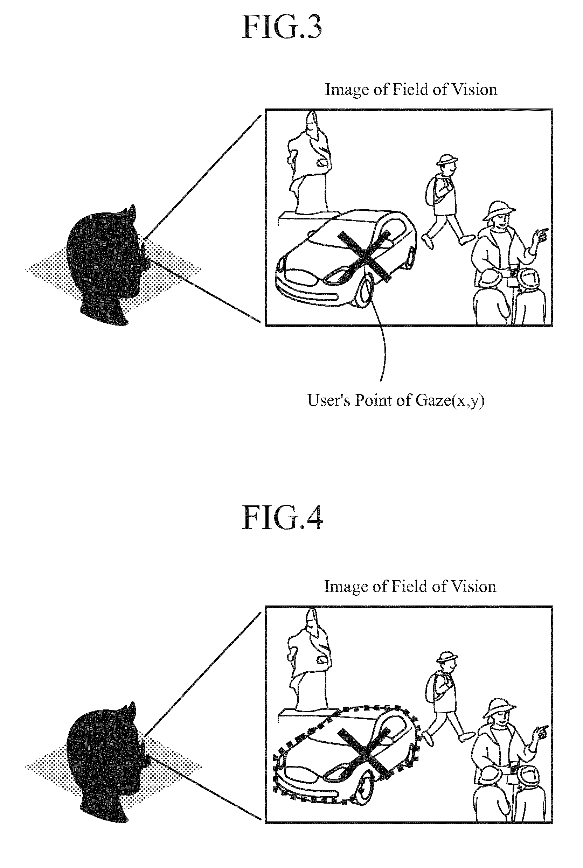

Next, an operation of the information display device according to Embodiment 1 configured as described above will be described. Fig. 2 is a flowchart illustrating the operation of the information display device when the information to be provided to the user is displayed in the field of vision. When the processing is started, first, the user's line of sight is detected (step ST11). That is, the line-of-sight detection section 2 detects a point in the field of vision being viewed by the user (point of gaze). Fig. 3 illustrates an example where the point of gaze is placed on an automobile in the lower left in the field of vision. The point of gaze detected by the line-of-sight detection section 2 is sent to the object recognition section 3, for example, as coordinate values (x, y) in the image.

Then, the region of the object being viewed by the user is extracted (step ST12). That is, the object recognition section 3 recognizes a region as the object being viewed by the user, out of the images sent by the image input section 1, which includes the coordinate values (x, y) corresponding to an example of positional information on the point of gaze sent by the line-of-sight detection section 2, and extracts the region in which the object is present as depicted by a dashed line in Fig. 4. In other words, the object recognition section 3 extracts the region in the image of the object including the point of gaze. In this manner, obtained is the information indicative of the region of the object, for example, a point sequence (x1, y1), (x2, y2), ..., (xn, yn) indicative of the contour of the region. The information indicative of the region of the object is sent to the display position determination section 5.

Then, the display position for the information is determined (step ST13). That is, the display position determination section 5 determines in what region (position) in the field of vision the information is to be displayed. At this time, the display position is determined such that the information is displayed at a position in the field of vision that corresponds to a region (second region) different from the region (first region) being viewed by the user. Various algorithms may be used to determine what part of the region not being viewed by the user is used to display the information. For example, the following method may be used for simplification. Besides, the region different from the region being viewed by the user may include a part of the region being viewed by the user to the extent that the object being viewed by the user is not hindered by the display information.

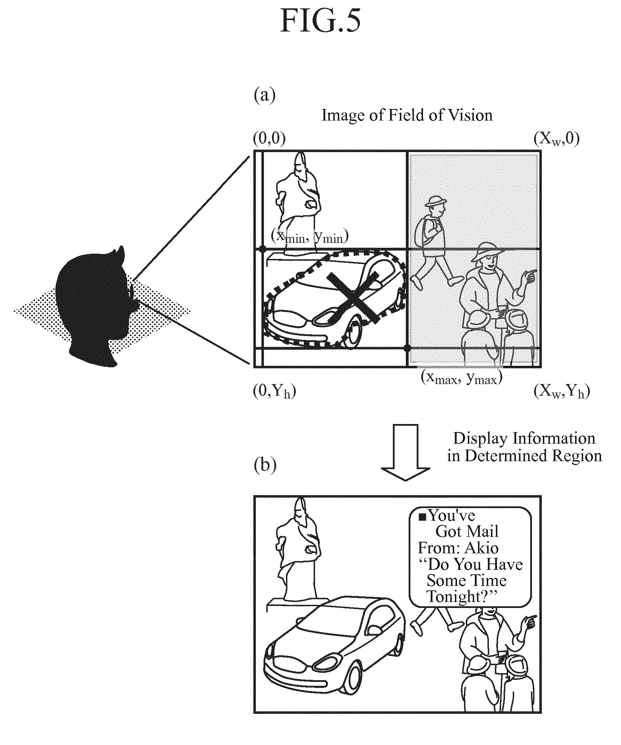

Specifically, the maximum values and minimum values of x and y are determined from the point sequence data indicative of the contour of the region, and these are denoted as xₘₐₓ, yₘₐₓ, xₘᵢₙ, and yₘᵢₙ. Then, a rectangular region enclosing the region is determined to be (xₘᵢₙ, yₘᵢₙ) - (xₘₐₓ, yₘᵢₙ) - (xₘₐₓ, yₘₐₓ) - (xₘᵢₙ, yₘₐₓ) as shown in Fig. 5(a). Therefore, the region having the largest area of the upper, lower, left, and right regions of the rectangle is determined to be a display area.

As depicted in Fig. 5(a), when the size of the field of vision is denoted as Xw in the horizontal direction and as Yh in the vertical direction, the area of each region can be expressed by formulae illustrated below. The display position determination section 5 uses the formulae to find the areas, selects the largest region as the display region, and sends the information on the selected region to the information display section 6 as the display position.
Upper region: X_{w} • yₘᵢₙ
Lower region: X_{w} • (Yₕ - yₘₐₓ)
Left region: xₘᵢₙ • Yₕ
Right region: (X_{w} - xₘₐₓ) • Yₕ

Then, the information is displayed (step ST14). That is, the information display section 6 displays the information at the display position sent from the display position determination section 5 as depicted in Fig. 5(b). Additionally, if displaying the information at the display position is difficult due to the size of the displayed information, etc., the information display section 6 may be configured such that the display is performed after processing such as displacement of the display position is executed.

As described above, the information display device according to Embodiment 1 is configured to display the information at the position on which the user's line of sight in the field of vision does not fall based on the information on the region (first region) in the image of the object extracted by the object recognition section 3, and thus, the information can be appropriately displayed without blocking the object being viewed by the user.

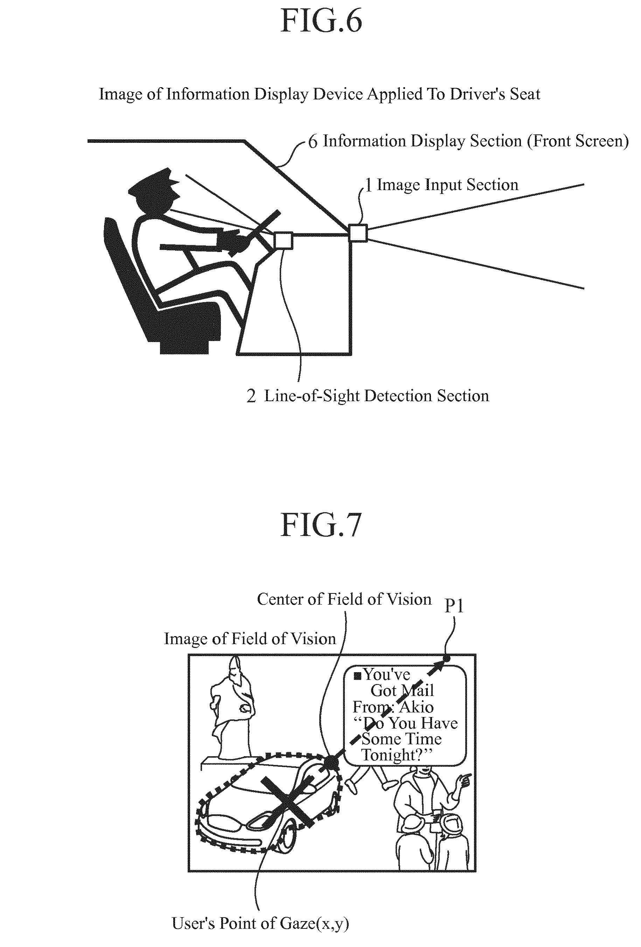

Additionally, in the above-described example, there is described the case where the information display device is applied to the pair of glasses. However, the information display device may be applied to, for example, a driver's seat in an automobile, as shown in Fig. 6. In this case, it is configured as follows: the line-of-sight detection section 2 that captures the driver's line of sight is installed on an instrument panel portion; the image input section (camera) 1 is installed outside to be able to take an image of the driver's field of vision; and the information display section 6 includes a head-up display that displays information on a front screen. This configuration allows the driver to receive information presented according to the surrounding condition.

### Embodiment 2

In an information display device according to Embodiment 2 of the present invention, the determination of the display position for the information to be presented to the user is simplified as compared to that of Embodiment 1. The configuration of the information display device is the same as that of the information display device according to Embodiment 1 depicted in Fig. 1 except for the operation of the display position determination section 5.

In the display position determination section 5 of the information display device according to Embodiment 2, an algorithm that determines what part of the region in the field of vision that is not being viewed by the user is used to display the information is different from that of Embodiment 1. That is, in Embodiment 1, the display position determination section 5 determines as the display position for the information the largest region of the upper, lower, left, and right regions of the object that is recognized by the object recognition section 3; however, in Embodiment 2, the display position is determined such that the information to be presented to the user is displayed at a position opposite to and far from the object recognized by the object recognition section 3 with respect to the center of the field of vision. In other words, the display position determination section 5 determines as the display position a position in the field of vision that corresponds to a region opposite to the region being viewed by the user with respect to the center in the image corresponding to the field of vision.

Next, an operation of the information display device configured as described above will be described. The operation of the information display device are the same as that of the information display device according to Embodiment 1 illustrated in the flowchart in Fig. 2 except for the contents of the display position determination processing at step ST13. Hereinafter, with reference to the flowchart illustrated in Fig. 2, the description is focused on different parts from Embodiment 1, and the description of the same parts as those in Embodiment 1 will be simplified.

When the processing is started, first, the user's line of sight is detected (step ST11). Then, the region of the object being viewed by the user is extracted (step ST12). Then, the display position for the information is determined (step ST13). That is, the display position determination section 5 determines the display position such that the information to be presented to the user is to be displayed at a position opposite to the object extracted by the object recognition section 3 at step ST12 with respect to the center of the field of vision, that is, at a position far from the region being viewed by the user, as depicted in Fig. 7. In other words, a region passing through the center in the field of vision and having as a reference point a position P1 farthest from the object is determined as the display position. Then, the information is displayed (step ST14).

As described above, the information display device according to Embodiment 2 displays the information at the position farthest from the object being viewed by the user as depicted in Fig. 7, and thus, the information can be appropriately displayed without blocking the object being viewed by the user. Furthermore, unlike Embodiment 1, the upper, lower, left, and right areas of the object need not be found in determining the display position for the information, and thus, a processing time until the determination of the display position can be shortened.

Additionally, in Embodiment 2, it is configured such that the information is displayed at the position farthest from the "object" being viewed by the user. However, it may be further simplified to be varied such that the information is displayed at the position farthest from the user's "point of gaze".

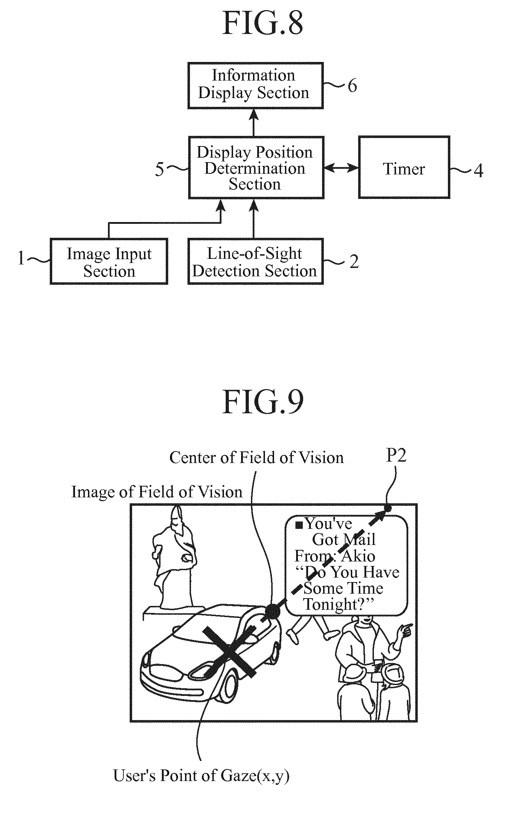

Fig. 8 is a block diagram depicting a configuration of an information display device according to a variation of Embodiment 2. This information display device is configured such that the object recognition section 3 is eliminated from the information display device according to Embodiment 1, and that the image obtained by the image input section 1 is sent directly to the display position determination section 5.

The display position determination section 5 determines the display position, that is, in what region the information is to be displayed, based on the image from the image input section 1 and the information from the line-of-sight detection section 2. Specifically, the display position determination section 5 determines the display position such that the information to be presented to the user is displayed at the position opposite to and far from the point of gaze detected by the line-of-sight detection section 2 with respect to the center in the field of vision. In other words, the display position determination section 5 determines as the display position a position in the field of vision corresponding to a region opposite to the user's point of gaze with respect to the center in the image corresponding to the field of vision.

Next, an operation of the information display device according to the variation of Embodiment 2 configured as described above will be described. The operation of the information display device is the same as that of the information display device according to Embodiment 1 illustrated in the flowchart in Fig. 2 except that the processing of extracting the region of the object at step ST 12 is eliminated and that the contents of the processing at step ST13 are changed. Hereinafter, the description is focused on different parts from Embodiment 1, and the description of the same parts as those in Embodiment 1 will be simplified.

When the processing is started, first, the user's line of sight is detected (step ST11). Then, the display position for the information is determined (step ST13). Specifically, the display position determination section 5 determines the display position such that the information to be presented to the user is displayed at the position opposite to the point of gaze detected by the line-of-sight detection section 2 at step ST11 with respect to the center of the field of vision, that is, at the position far from the region being viewed by the user, as depicted in Fig. 9. In other words, the region having the farthest position P2 starting from the point of gaze and passing through the center in the field of vision and serving as a base point is determined as the display position. Then, the information is displayed (step ST14).

As described above, in the information display device according to the variation of Embodiment 2, the information is displayed at the position farthest from the user's point of gaze as depicted in Fig. 9, and thus, the information can be appropriately displayed without blocking the object being viewed by the user. Furthermore, as compared to a case where the information is displayed at the position farthest from the "object" being viewed by the user, the need for the processing of recognizing the object is eliminated, and thus, the processing time until the determination of the display position for the information can be further shortened.

Additionally, in the above Embodiment 2 and variation of Embodiment 2, it may be configured such that in the determination of the display position, if the display of the information at that position is difficult due to the size of the displayed information and so on, the information can be displayed with the display position displaced.

### Embodiment 3

An information display device according to Embodiment 3 of the present invention is configured such that in the information display device according to Embodiment 1, the display position (region) for the information to be presented to the user is further narrowed to avoid hindering the field of vision as much as possible. The configuration of the information display device is the same as that of the information display device according to Embodiment 1 depicted in Fig. 1 except for the operations of the object recognition section 3 and the display position determination section 5.

Similarly to that of Embodiment 1, the object recognition section 3 recognizes and extracts the object including the point of gaze sent from the line-of-sight detection section 2 from the image sent from the image input section 1, and further recognizes and extracts the object that is present in the display region determined by the display position determination section 5. The information indicative of the region of the object recognized by the object recognition section 3 is sent to the display position determination section 5.

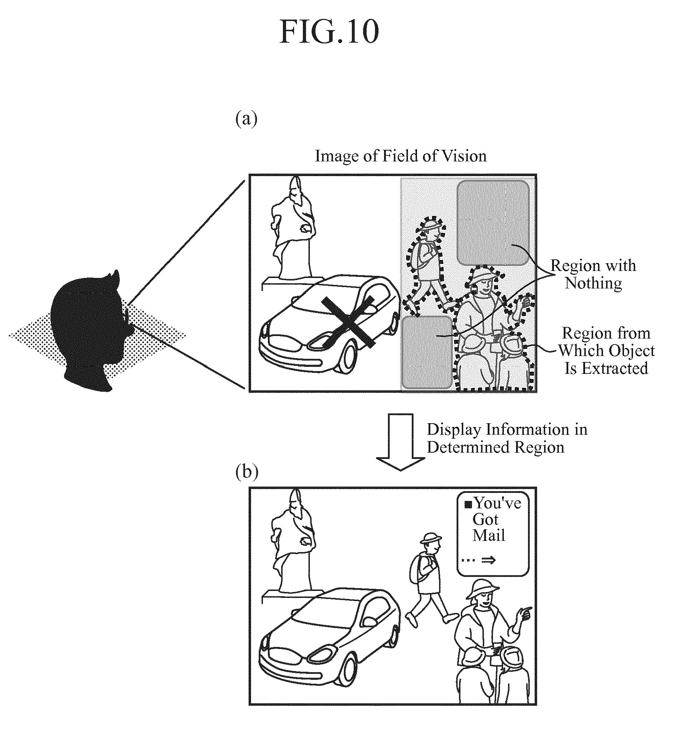

As depicted as a region further enclosed by a dashed line in Fig. 10(a) in the region (display region) having the largest area that is determined in a similar manner to that of Embodiment 1, a region with nothing other than a region (third region) of the object extracted by the object recognition section 3 is determined as the display position. The information indicative of the display position determined by the display position determination section 5 is sent to the information display section 6.

Next, an operation of the information display device configured as described above will be described. The operation of the information display device are the same as that of the information display device according to Embodiment 1 illustrated in the flowchart in Fig. 2 except for the contents of the display position determination processing at step ST13. Hereinafter, with reference to the flowchart illustrated in Fig. 2, the description is focused on different parts from Embodiment 1, and the description of the same parts as those in Embodiment 1 will be simplified.

When the processing is started, first, the user's line of sight is detected (step ST11). Then, the region of the object being viewed by the user is extracted (step ST12). Then, the display position for the information is determined (step ST13). That is, the display position determination section 5 determines in what region (position) in the field of vision the information is to be displayed. At this time, the display position is determined such that the information is displayed in a region different from the region being viewed by the user, for example, as follows.

First, similarly to that of Embodiment 1, the display position determination section 5 determines as the display region for the information the largest one of the upper, lower, left, and right regions of the object recognized by the object recognition section 3. Then, the object recognition section 3 recognizes and extracts the region of the object that is present in the display region determined by the display position determination section 5 as depicted in Fig. 10(a). The above-described image processing may be executed using an existing technique as disclosed in Non-patent Document 2. Then, the display position determination section 5 determines as the display position a region with nothing other than the object recognized by the object recognition section 3. In other words, the display position determination section 5 determines as the display position a position in the field of vision which corresponds to a position in the field of vision corresponding to a region different from the region (third region) in which the object is present in the display region (second region) extracted by the object recognition section 3. Additionally, the region determined in this case may include a part of the region in which the object is present (third region). The information indicative of the display position determined by the display position determination section 5 is sent to the information display section 6. Then, the information is displayed (step S14).

As described above, in the information display device according to Embodiment 3, for example, the region having the largest area around the object is identified, and the region with nothing in that identified region is further identified, as depicted in Fig. 10(a); thereafter, the identified region is determined as the display region for the information, and the information is displayed, as depicted in Fig. 10(b). Therefore, the information can be appropriately displayed without blocking the object being viewed by the user. Furthermore, the information is displayed so as not to block the objects in the field of vision other than the object being gazed by the user, and thus, it becomes possible for the user to browse the information while grasping the situation of the objects in the field of vision other than the object being gazed. Additionally, if displaying the information in that region is difficult due to the size of the displayed information and so on, the information can be configured to be displayed with displacement of the display position etc.

### Embodiment 4

An information display device according to Embodiment 4 of the present invention is configured to control the display of the information in accordance with the user's point of gaze. The configuration of the information display device is the same as that of the information display device according to Embodiment 1 depicted in Fig. 1 except for the operation of the display position determination section 5.

In Embodiment 1, the display position determination section 5 performs control on the basis of the information from the timer 4 such that the position of the displayed information is kept unchanged for the given time. However, in Embodiment 4, the displayed position of the information is made variable according to movement of the user's field of vision.

Next, an operation of the information display device configured as described above will be described. The operation of the information display device are the same as that of the information display device according to Embodiment 1 illustrated in the flowchart in Fig. 2 except for the operation of the display position determination section 5. Hereinafter, with reference to the flowchart illustrated in Fig. 2, the description is focused on different parts from Embodiment 1, and the description of the same parts as those in Embodiment 1 will be simplified.

When the processing is started, first, the user's line of sight is detected (step ST11). Then, the region of the object being viewed by the user is extracted (step ST12). Then, the display position for the information is determined (step ST13). That is, the display position determination section 5 determines in what region (position) in the field of vision the information is to be displayed. At this time, the display position is determined such that the information is displayed in a region different from the region being viewed by the user. The information indicative of the display position determined by the display position determination section 5 is sent to the information display section 6. Then, the information is displayed (step ST14).

In the above situation, when the user's point of gaze moves to the display region for the information within a given time measured by the timer 4, the display position determination section 5 determines that the user is viewing the information, and keeps the display position for the information unchanged as long as the point of gaze sent from the line-of-sight detection section 2 does not leave the display region for the information. At this time, the timer 4 is reset.

Furthermore, when the user's point of gaze leaves the display region for the information, the display position determination section 5 starts the timer 4. When the given time, for example, several seconds, has passed, the display position determination section 5 allows the display position for the information to be changed. When the user' s point of gaze returns to the display region for the information again within the given time, the display position determination section 5 resets the timer 4 to maintain the display position for the information.

Additionally, it may be configured such that even if the change in the display position for the information is allowed after the given time, when a moving amount of the point of gaze is small, for example, smaller than a predetermined threshold, the display position for the information is not changed.

As described above, the information display device according to Embodiment 4 is configured to change the display position for the information according to the movement of the user's point of gaze. Thus, the information can be appropriately displayed.

### Embodiment 5

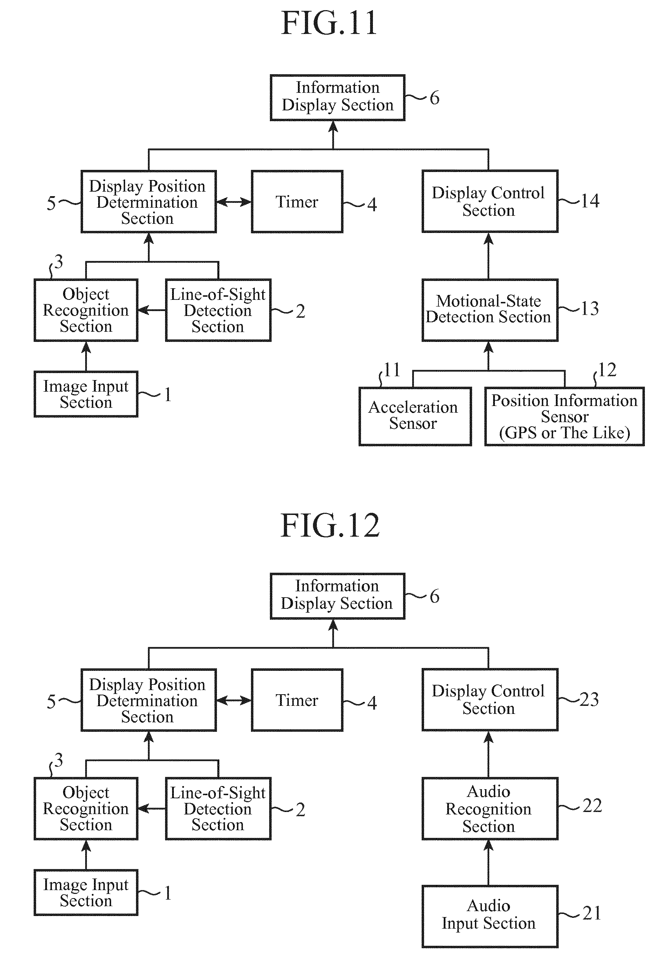

An information display device according to Embodiment 5 is configured to control display of information according to a user's motional state. Fig. 11 is a block diagram depicting a configuration of the information display device according to Embodiment 5. The information display device is configured by adding an acceleration sensor 11, a position information sensor 12, a motional-state detection section 13, and a display control section 14 to the information display device according to Embodiment 1.

The acceleration sensor 11 detects the acceleration of the information display device. As the acceleration sensor 11, an acceleration sensor equivalent to the one used in a cellular phone, for example, may be used. The information indicative of the acceleration detected by the acceleration sensor 11 is sent to the motional-state detection section 13.

As the position information sensor 12, a position information sensor equivalent to a GPS (Global Positioning System) equipped in a cellular phone, for example, may be used. The position information sensor 12 receives signals from satellites to detect the position of the information display device on the earth. The information indicative of the position detected by the position information sensor 12 is set to the motional-state detection section 13.

The motional-state detection section 13 determines the physical motional state of the information display device based on the information from the acceleration sensor 11 and the position information sensor 12, and sends the information on the motional status to the display control section 14.

The display control section 14 generates the information indicating whether or not to display the information in accordance with the information on the motional status from the motional-state detection section 13, and sends the generated one to the information display section 6. Thus, the information display section 6 displays the information to be provided to the user or stops the display.

Next, an operation of the information display device configured as described above will be described. Here, the description is focused on control of timing for information display. If the user is, for example, walking, when the information display is performed to the user to thereby block the user' s field of vision, the user may fall into a dangerous situation. To avoid this situation, the motional-state detection section 13 determines the motional states of the information display device and the user to control the information display.

Specifically, the motional-state detection section 13 determines whether the user is walking or running based on the information from the acceleration sensor 11. If detecting the state of walking, running, or the like, it sends the information indicating that effect to the display control section 14.

Upon receiving the information on the motional status from the motional-state detection section 13, the display control section 14 determines whether the status is appropriate for the information display, and if the status is inappropriate, instructs the information display section 6 to stop the information display. In accordance with the instruction, the information display section 6 stops the information display.

When the user is in a stopping state, the motional-state detection section 13 detects the situation that the user stops based on the information from the acceleration sensor 11, and sends that information to the display control section 14. Upon detecting that the user is in the stopping state, the display control section 14 determines that the state is suitable for the information display, and instructs the information display section 6 to execute the information display.

In the above-described example, the description is given under the following conditions set in the display control section 14: "the state of walking or running is unsuitable for the information display", "the state of stopping is suitable for the information display", etc. However, if more detailed state determination can be made based on the information from the acceleration sensor 11 and the position information sensor 12, it can be configured to set the conditions in more detail. For example, the condition may be set such that "the state of stopping or directing a user's gaze downward is suitable for the information display". In addition, it may also be configured to allow the user to set the above conditions, and allow the conditions to be stored inside the information display device.
Moreover, it may also be configured to stop the information display when presence of many vehicles around the user is detected. Note that whether or not the vehicle is present around the user can be determined using the position information from the position information sensor 12 and map data. For example, when the user's position is near a road on a map, the presence of the vehicle around the user can be determined. The map data may be configured to be stored in the information display device or acquired from an external apparatus such as a server.

As described above, the information display device according to Embodiment 5 is configured to controllably determine whether or not to display the information in accordance with the user's motional status. Thus, the user can be prevented from falling into a dangerous situation as a result of gazing of the information.

### Embodiment 6

An information display device according to Embodiment 6 controls the display of the information according to a surrounding audio state. Fig. 12 is a block diagram depicting a configuration of the information display device according to Embodiment 6. The information display device is configured by eliminating the acceleration sensor 11, the position information sensor 12, the motional-state detection section 13, and the display control section 14 from the information display device according to Embodiment 5 depicted in Fig. 11, and adding an audio input section 21, an audio recognition section 22, and a display control section 23 thereto.

The audio input section 21 is constituted by, for example, a microphone, and inputs a user's voice. The voice input by the audio input section 21 is sent to the audio recognition section 22 as audio information.

The audio recognition section 22 recognizes the voice from the audio information sent from the audio input section 21. The result of audio recognition obtained in the audio recognition section 22 is sent to the display control section 23.

The display control section indicates to the information display section 6 whether or not to perform the information display in accordance with the audio recognition result from the audio recognition section 22. Thus, the information display section 6 displays the information to be provided to the user, or stops the display.

Next, an operation of the information display device configured as described above will be described. Here, the description is focused on control of timing for the information display. The audio input section 21 receives sounds around the user, the user's voice, or the like, and sends the received one to the audio recognition section 22. The audio recognition section 22 determines what sound or voice is input from the audio input section 21, and sends the result of the determination to the display control section 23 as the audio recognition result. For example, if an emergency vehicle passes by around the user, the audio recognition section 22 recognizes that the sound comes from the emergency vehicle based on the sound of the emergency vehicle received from the audio input section 21, and sends the audio recognition result to the display control section 23. Based on the audio recognition result from the audio recognition section 22, the display control section 23 determines that the case where the emergency vehicle is nearby is unsuitable for the information display, and instructs the information display section 6 to stop the information display.

Additionally, it may also be configured to control the information display directly when the audio recognition section 22 recognizes the voice uttered by the user. For example, when the user utters a voice of "stop the information display" or the like, the audio recognition section 22 detects such an instruction to notify the display control section 23 that the "stop the information display" has been recognized. Thus, the display control section 23 determines to be unsuitable for the information display, and instructs the information display section 6 to stop the information display. Alternatively, that the information display is allowed can also be indicated by voice.

As described above, the information display device according to Embodiment 6 is configured to controllably determine whether or not to display the information in accordance with the surrounding sound. Thus, the information can be appropriately displayed in accordance with the surrounding condition.

### Embodiment 7

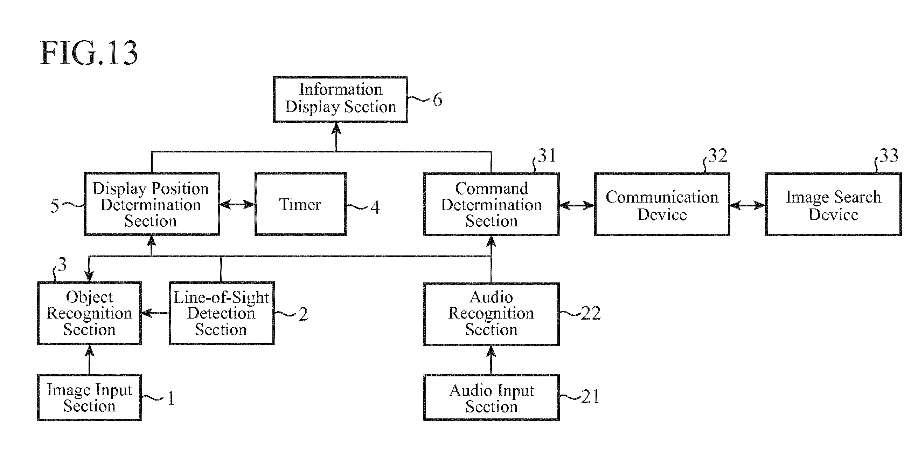

An information display device according to Embodiment 7 of the present invention corresponds to the information display device according to Embodiment 6 to which an image search function is added. Fig. 13 is a block diagram depicting a configuration of the information display device according to Embodiment 7. The information display device is configured by providing a command determination section 31 instead of the display control section 23 of the information display device according to Embodiment 6 depicted in Fig. 12 and further adding a communication device 32 and an image search device 33 to the information display device according to Embodiment 6 depicted in Fig. 12.

When the audio recognition result sent by the audio recognition section 22 is indicative of a search command, the command determination section 31 acquires an image to be searched for based on the information from the object recognition section 3 and the line-of-sight detection section 2, and sends the acquired one to the communication device 32. In addition, the command determination section 31 sends the search result information received from the communication device 32 to the information display section 6.

The communication device 32 sends the image to be searched for sent from the command determination section 31 to the image search device 33 to request an image search. In addition, the communication device 32 sends the search result information sent from the image search device 33 to the command determination section 31.

The image search device 33 searches for the image based on the image to be searched for sent from the communication device 32, and sends the search result information to the communication device 32.

Next, an operation of the information display device configured as described above will be described. The user makes an utterance, for example, "search for the object being viewed" by voice while focusing on an object that is subjected to the image search in the field of vision. The audio input section 21 receives the voice from the user's utterance and sends it to the audio recognition section 22. The audio recognition section 22 informs the command determination section 31 that the voice received from the audio input section 21 is a line-of-sight search command.

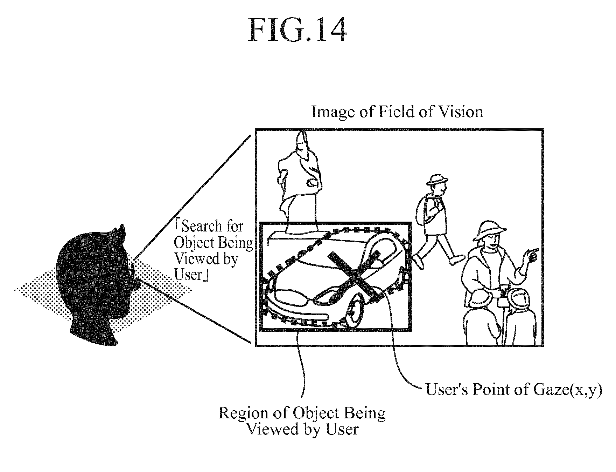

The command determination section 31 has information on a series of required processing corresponding to the information from the audio recognition section 22, and starts a series of processing related to a line-of-sight search based on the information indicating that the voice is the line-of-sight search command. That is, the command determination section 31 obtains the information on the point of gaze from the line-of-sight detection section 2, and gets the object recognition section 3 to extract the region of the object located in the corresponding position. The operation of the object recognition section 3 is similar to the one described in Embodiment 1. As depicted in Fig. 14, when the object recognition section 3 extracts the region of the object being viewed by the user, the command determination section 31 acquires the image of the region, and sends that image to the image search device 33 via the communication device 32 to request an image search.

As the image search device 33, for example, an image search site in Google may be used. The image search device 33 sends the information related to the searched image to the communication device 32 as the search result information. The communication device 32 sends the search result information from the image search device 33 to the command determination section 31. The command determination section 31 acquires the search result information from the communication device 32 and sends that information to the information display section 6. The information display section 6 receives the information indicative of the display position from the display position determination section 5 and the search result information from the command determination section 31 to perform the information display in the appropriate region. The above series of processing allows the user to search for the information related to the object in the field of vision to which the user pays attention and to reference the results.

As described above, the information display device according to Embodiment 7 is configured to acquire the information related to the image being viewed by the user from the image search device 33 in accordance with the voice uttered by the user and to display the acquired information in the appropriate region. Thus, the user's desired information can be provided.

It is noted that in the present invention, a free combination in the embodiments, a modification of arbitrary components in the embodiments, or an omission of arbitrary components in the embodiments is possible within a range of the invention.

### INDUSTRIAL APPLICABILITY

The present invention can be used for, for example, a car navigation system in which a user displays a variety of information in an actual field of vision being viewed via windows.

### DESCRIPTION OF REFERENCE NUMERALS and SIGNS

- 1:: Image input section
- 2:: Line-of-sight detection section
- 3:: Object recognition section
- 4:: Timer
- 5:: Display position determination section
- 6:: Information display section
- 11:: Acceleration sensor
- 12:: Position information sensor
- 13:: Motional-state detection section
- 14:: Display control section
- 21:: Audio input section
- 22:: Audio recognition section
- 23:: Display control section
- 31:: Command determination section
- 32:: Communication device
- 33:: Image search device.

## Claims

1. An information display device comprising:
an image inputter that inputs an image corresponding to a user's field of vision;
a line-of-sight detector that detects a point of gaze indicative of a position of a line of sight in the user's field of vision;
an object recognizer that extracts as a first region a region in the image of an object including the point of gaze detected by the line-of-sight detector from the image input by the image inputter;
a display position determinator that determines as a display position a position on which the user's line of sight does not fall in the field of vision based on information on the first region extracted by the object recognizer; and
an information display that displays information to be presented to a user at the display position determined by the display position determinator.

2. The information display device according to claim 1, wherein the display position determinator determines as the display position a position in the field of vision corresponding to a second region which is different from the first region in the image.

3. The information display device according to claim 2, wherein the object recognizer extracts a region of an object present in the second region as a third region, and
the display position determinator determines as the display position a position in the field of vision corresponding to a region that is located in the second region and that is different from the third region.

4. The information display device according to any one of claim 1 to 3, comprising a timer that measures time, wherein the display position determinator maintains the display position until a time set in the timer is measured.

5. The information display device according to any one of claim 1 to 4, wherein the display position determinator controls the display position for the information according to a movement of the user's point of gaze detected by the line-of-sight detector.

6. The information display device according to any one of claim 1 to 5, comprising:
a motional-state detector that detects a user's motional state based on information from an acceleration sensor that detects acceleration and a position information sensor that detects a position; and
a display controller that indicates whether or not to perform information display, based on the user's motional state detected by the motional-state detector, wherein the information display performs the information display, based on the indication from the display controller.

7. The information display device according to any one of claim 1 to 5, comprising:
an audio inputter that inputs a surrounding sound;
an audio recognizer that recognizes the sound input by the audio recognizer; and
a display controller that indicates whether or not to perform information display in accordance with an audio recognition result from the audio recognizer, wherein the information display performs the information display, based on the indication from the display controller.

8. The information display device according to any one of claim 1 to 5, comprising:
an audio inputter that inputs a surrounding sound;
an audio recognizer that recognizes the sound input by the audio recognizer;
a command determinator that acquires an image to be searched for, based on information from the object recognizer and the line-of-sight detector, and that requests a search for the image, when an audio recognition result from the audio recognizer is indicative of a search command; and
an image search device that searches for information related to the image received from the command determinator and that sends a search result to the command determinator,
wherein the command determinator sends information on the search result received from the image search device to the information display, and
the information display performs information display, based on the search result received from the command determinator.

9. The information display device according to claim 1, wherein the display position determinator determines as the display position a position in the field of vision corresponding to a region opposite to the first region with respect to a center of the image.
